# EUROPEAN PATENT APPLICATION

(11) **EP 4 803 317 A1**
(43) Date of publication of application: **09.09.2026**
(21) Application number: 24885382.2
(22) Date of filing: 08.10.2024
(51) Int. Cl.: B41J 2/175, B41J 2/01, B41J 29/38

(54) **REMAINING QUANTITY MANAGEMENT DEVICE**

(30) Priority: 31.10.2023 JP 2023186779
(71) Applicant: Brother Kogyo Kabushiki Kaisha, Nagoya Aichi 467-8561 (JP)
(72) Inventor: KIMOTO, Taichiro, Aichi 467-8562 (JP)
(74) Representative: J A Kemp LLP
(86) International application number: PCT/JP2024/035910
(87) International publication number: WO 2025/094607

(57) **Abstract**

Supply of an entire amount of printing consumable in the storage body into the tank is accurately detected. The printer 200 includes a tank 32 configured to store ink supplied from a bottle, and a level sensor 90. In S201 a controller 50 obtains printing-amount information of ink, and in S220 determines whether a current residual amount, which is calculated after the ink in the tank 32 has decreased below an upper reference level HL, reaches a first threshold value. In S270 the controller determines whether the current residual amount, which is calculated after the level of the ink in the tank has decreased below the second threshold value, reaches a second threshold value. When the current residual amount is determined to reach the second threshold value in S270, in S280 the controller 50 prohibits image formation. In response to the level of ink in the tank 32 having increased to at or above the upper reference level HL, in S125 the controller determines that the entire amount of ink in the bottle is supplied. When the entire amount of ink in the bottle is determined to be supplied in S125, in S145 the controller 50 allows the image formation.

## Description

### [Technical Field]

The present disclosure relates to a residual amount management device to manage a residual amount of a printing consumable within a tank of a printing device.

### [Background Art]

As disclosed in a patent literature PTL1 described, a technology is known in which a sensor is provided at a bottom portion of a tank of a printing device, and, based on the detection results of the level of printing consumable by the sensor, the latest residual amount of the printing consumable in the printing device is calculated and managed.

### [Citation List]

### [Patent Literature]

[PTL 1] Japanese Patent Application Publication No. 2016-190361

### [Summary of Invention]

### [Technical Problem]

In the above known technology, when the printing consumable in the tank is consumed and reduced by printing being performed, the printing consumable in the tank can be replenished by a user supplying the printing consumable from a storage body into the tank.

In the above known technology, since the position of the sensor in the tank is located near the bottom portion, it is difficult to distinguish whether the amount of printing consumable that the user has supplied into the tank from the storage body is equivalent to the entire capacity of the storage body.

On the other hand, in recent years, a service is known in which a predetermined contract is concluded with the user of the printing device, and based on the contract, the user is charged according to the printing content. Depending on the contracted service, printing consumables may be delivered to the user from a predetermined delivery source according to the consumption of the printing consumable without any financial burden to the user. In this case, if printing is performed without supplying the entire amount of the printing consumable in the storage body and the printing consumable in the tank is consumed as described above, new printing consumables would be delivered even though some printing consumable remains in the storage body, and the service provider will become greatly disadvantaged.

In view of the foregoing, it is an object of the present invention to provide a residual amount management device which can accurately detect the supply of the entire amount of printing consumable in the storage body into the tank.

### [Solution to Problem]

In order to attain the above and other objects, according to the present invention, a level sensor capable of detecting the level of printing consumable inside the tank of the print device is provided at an upper portion of the tank. When image formation is performed using the using the printing unit, printing consumable in the tank is consumed and the liquid level of printing consumable decreases. By performing a printing amount obtaining process by the residual amount management device, printing-amount information indicating a printing amount of the printing consumable consumed by the image formation, such as a dot count of ink, is obtained. After the level of printing consumable in the tank has decreased from at or above the upper reference level to below the upper reference level is detected using the level sensor, a current estimated residual amount of printing consumable is calculated using the printing-amount information in the residual amount management device.

When the printing consumable in the tank has been consumed and reached the empty state where the tank is nominally empty, printing cannot be performed. To handle this situation, in the present invention, a second threshold value for the residual amount of printing consumable is set. The residual amount management device performs a second determining process to determine whether the estimated residual amount reaches a second threshold value. When the current estimated residual amount is determined to reach the second threshold value, a printing prohibiting process is performed to prohibit the image formation using the printing unit.

On the other hand, in the present invention, to ensure the supply of the entire amount of printing consumable in the bottle into the tank for each supply operation, it is assumed that, in an ideal situation, printing consumable from the bottle is newly supplied into the tank when the printing consumable in the tank has been consumed and the residual amount of printing consumable has decreased to a certain extent. For such a purpose, a first threshold value for the residual amount of printing consumable is set. By performing the first determining process by the residual amount management device, it is determined whether the current estimated residual amount reaches the first threshold value.

In a case where the printing consumable has been consumed and the current estimated residual amount is determined to have reached the first threshold value in the first determining process, a third determining process is performed. In the third determining process, in response to detection, by the level sensor, that the printing consumable has increased from below the upper reference level to at or above the upper reference level, it can be determined that the entire amount of the printing consumable in the storage body is supplied into the tank. Ia case where the entire amount of the printing consumable in the storage body is determined to be supplied into the tank in the third determining process, a printing allowance process is performed to allow the image formation using the printing unit.

According to the present invention, when the user supplies the tank with printing consumable from the bottle in response to printing consumable being consumed, subsequent printing can be performed. Therefore, the supply of the entire amount of printing consumable in the bottle into the tank can be accurately detected.

### [Advantageous Effects of Invention]

According to the present invention, the supply of the entire amount of ink in the storage body into the tank can be accurately detected.

### [Brief Description of Drawings]

[Fig. 1] FIG. 1 is a block diagram illustrating an overall functional configuration of a printing process system.
[Fig. 2] FIG. 2 is a schematic diagram illustrating a printer included in the printing process system.
[Fig. 3] FIGS. 3A-3J are illustrations of the relation between an amount of ink in a tank and the ON/OFF state behavior of a level sensor.
[Fig. 4] FIG. 4 is an external view illustrating a state where an openable cover provided on a housing of a printer is open and ink supply ports of four tanks are exposed to an outside.
[Fig. 5] FIGS. 5A-5F are illustrations regarding a principle of calculating a pre-supply residual amount based on incrementing of a counter.
[Fig. 6] FIG. 6 is a flowchart illustrating an example of a control procedure performed by the printer.
[Fig. 7] FIG. 7 is a flowchart illustrating details of a printer initialization process in S100.
[Fig. 8] FIG. 8 is a flowchart illustrating details of a level sensor checking process in S120.
[Fig. 9] FIGS. 9A-9F are illustrations of examples of displays.
[Fig. 10] FIG. 10 is a flowchart illustrating details of a process for a case where the cover is opened and closed in S300.
[Fig. 11] FIG. 11 is an illustration of an example of display.
[Fig. 12] FIG. 12 is a flowchart illustrating details of an ink consumption process in S200.
[Fig. 13] FIG. 13 is a flowchart illustrating details of a count incrementation process in S210.
[Fig. 14] FIG. 14 is a flowchart illustrating details of a consumable residual amount checking process in S215.
[Fig. 15] FIGS. 15A-15C are illustrations of examples of displays.

### [Description of Embodiments]

Hereinafter, an embodiment of the present invention will be described while referring to the accompanying drawings.

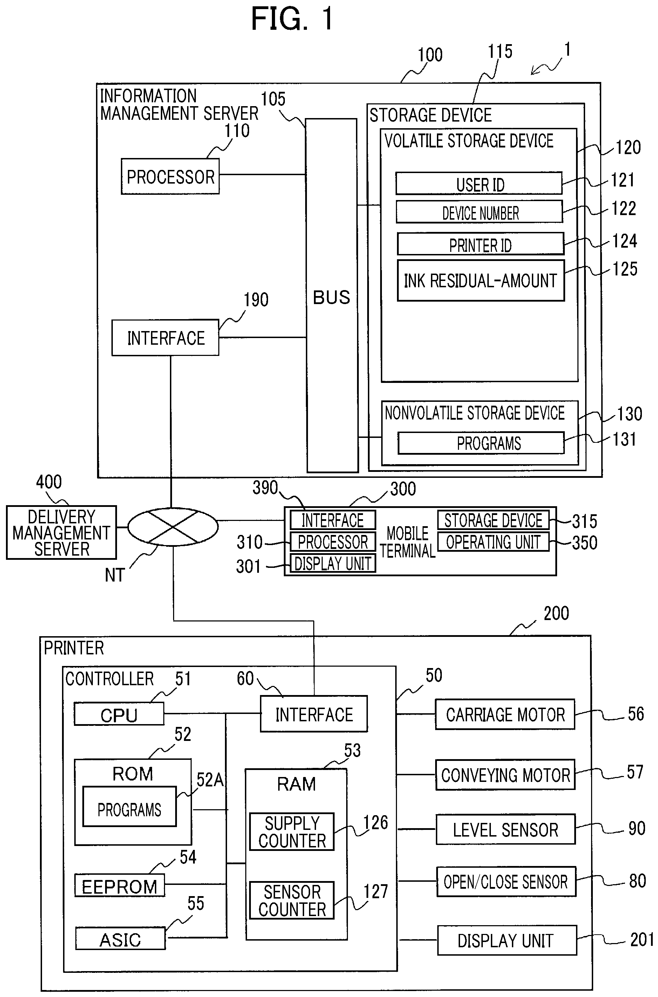

An embodiment of a printing process system of the present invention is illustrated in FIG. 1. The present embodiment is an embodiment of a printing process system 1 which provides a print service based on a print contract in which a fee is charged according to the number of prints executed by a printer 200. In the printing process system 1, when a certain amount of printing consumable (described later) used by the printer 200 is consumed, new printing consumables are automatically delivered by a service provider without any financial burden to the user and supplied.

### < Overall Configuration of Printing Process System >

In FIG. 1, the printing process system 1 includes an information management server 100, the printer 200, a mobile terminal 300, and a delivery management server 400. The information management server 100, the printer 200, the mobile terminal 300, and the delivery management server 400 are connected to a network NT, and are capable of communicating with each other. The printer 200 is an example of the printing device, and is also an example of the residual amount management device.

### < Configuration of Printer >

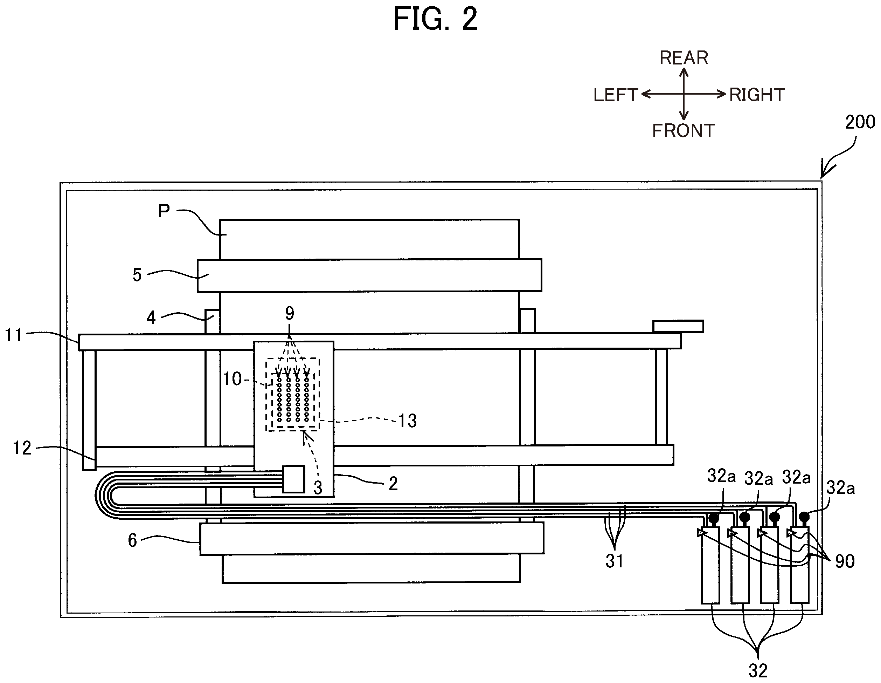

The printer 200 included in the printing process system 1 described above will be described with reference to FIG. 2. As illustrated in FIG. 2, the printer 200 includes a carriage 2, an inkjet head 3, a platen 4, and conveying rollers 5 and 6. The side on which the conveying roller 6 is located is the front side of the printer 200, and the side on which the conveying roller 5 is located is the rear side of the printer 200. Additionally, the direction from the rear side toward the front side is the conveying direction, and the left-right direction is also the main scanning direction.

The carriage 2 is connected to a carriage motor 56 (see FIG. 1) by, for example, a belt, although not shown in the drawings, and moves in the main scanning direction along guide rails 11 and 12 when driven by the carriage motor 56.

The inkjet head 3 is connected to four tubes 31. The four tubes 31 are respectively connected to four tanks 32 included in the right-front end portion of the printer 200 and juxtaposed in the main scanning direction. Ink in the colors black, yellow, cyan, and magenta stored in the corresponding ink tank 32 is supplied to the inkjet head 3 via the tubes 31.

The printer 200 in the present embodiment is, for example, a relatively low-cost model and is used by supplying each tank 32 with ink from a corresponding bottle (not shown). The bottle is an example of the storage body. In other words, a cap 32a is located on each tank 32, and by manually supplying the ink in the bottle in a state where the cap 32a is removed, the tank 32 is filled with the ink. The capacity of the bottle is set to a fixed value, i.e., a predetermined capacity, for example. In the delivery service described above, the bottle is delivered to the user, and by a single supplying operation performed by the user, the entire amount of ink in the bottle can be supplied into the tank 32 on the predetermined capacity basis described above. The ink is an example of the printing consumable.

The inkjet head 3 is mounted to the carriage 2, and image formation, i.e., printing is performed by ink being ejected from the inkjet head 3 while the carriage 2 moves the inkjet head 3 in the main scanning direction. The inkjet head 3 has a channel unit 13. The inkjet head 3 and the carriage 2 are each an example of the printing unit.

Four nozzle rows 9, each including a plurality of nozzles 10, are juxtaposed in the main scanning direction in the channel unit 13. The pluralities of nozzles 10 eject ink in the respective colors black, yellow, cyan, and magenta in order from the right side to the left side, for example. A corresponding color of ink is supplied to the plurality of nozzles 10 in each nozzle row via one common tube 31 and one common ink channel. In other words, ink from one tank 32 is supplied through the tube 31, the channel unit 13, and each of the nozzles 10, in that order.

The platen 4 is positioned beneath the inkjet head 3 and faces the nozzle surface during printing. The platen 4 extends across the entire width of a recording sheet P in the main scanning direction for supporting the recording sheet P from below. The recording sheet P is an example of the printing medium. The conveying rollers 5 and 6 are respectively positioned on an upstream side and a downstream side of the platen 4 in the conveying direction. The conveying rollers 5 and 6 are connected to a conveying motor 57 (see FIG. 1) through, for example, gear (not shown), and conveys the recording sheet P in the conveying direction by being rotated by the drive of the conveying motor 57.

The printer 200 having the above configuration performs printing on recording sheets P by moving the carriage 2 in the main scanning direction while ejecting ink from the pluralities of nozzles 10 of the inkjet head 3 each time after the recording sheet P is conveyed at a predetermined distance by the conveying rollers 5 and 6.

### < Level Sensor >

Each tank 32 includes a level sensor 90 for detecting whether the level of ink inside is higher than or equal to an upper reference level corresponding to an upper portion of the tank 32. The level sensor 90 detects the level of ink according to a well-known technique, and outputs a corresponding detection signal. The detection signal of the level sensor 90 enters an ON state when the liquid level is higher than or equal to the upper reference level, and enters an OFF state when the liquid level is below the upper reference level. The upper reference level is preferably the liquid level when the tank 32 contains ink greater than or equal to 75% of its capacity. As a result, the amount of wasted space can be reduced when the entire amount of ink in the ink bottle is supplied, and thus avoids an increase in the size of the printer 200. The upper reference level is more preferably the liquid level when the tank 32 contains ink greater than or equal to 80% of its capacity.

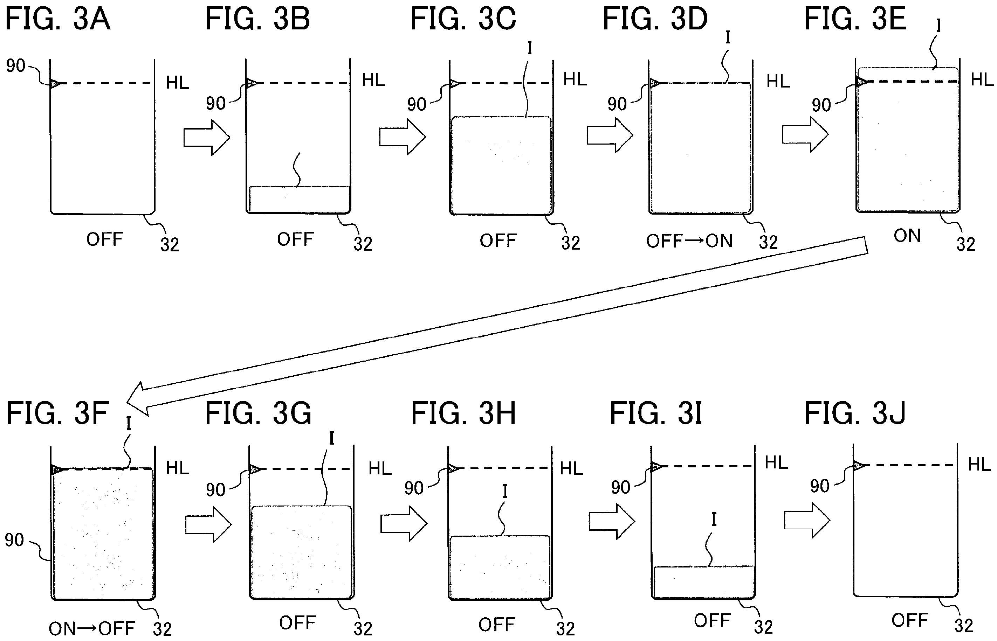

The relation between the amount of ink in the tank 32 and the behavior of the level sensor 90 in the ON/OFF state is illustrated in FIGS. 3A-3J. The black triangles illustrated in the figure represent the level sensor 90 described above, and the presence of ink at an upper reference level HL is detected by the level sensor 90. In this example, a distance from the bottom surface of the tank32 to the upper reference level HL is at a position slightly below the upper end portion of the tank 32. As described later in greater detail, the upper reference level HL is set to such a height that the liquid level I may not reach the height unless the entire amount of ink corresponding to the predetermined capacity described above is supplied into the tank 32 in an empty state.

FIG. 3A illustrates an empty state in which no ink is inside the tank 32, and the level sensor 90 is in the OFF state. FIG. 3B illustrates a state in which ink is supplied from the bottle into the tank 32 and the liquid level I has risen slightly. In this state, since the liquid level I has not yet reached the upper reference level HL, the level sensor 90 remains in the OFF state.

FIG. 3C illustrates a state where ink is further supplied from the state illustrated in FIG. 3B. FIG. 3D illustrates a state in which the liquid level I has reached the upper reference level HL from the state illustrated in FIG. 3C. In this state, the level sensor 90 switches from the OFF state described above to the ON state. The state illustrated in FIG. 3E in which the tank 32 is substantially full of ink is reached by further supply of ink to increase the liquid level I. Throughout FIGS. 3D to 3E, the level sensor 90 remains in the ON state.

On the other hand, when printing is performed by the inkjet head 3 and ink is consumed for example, the liquid level I decreases slightly, and the liquid level I decreases to below the upper reference level HL from the state illustrated in FIG. 3E where the tank 32 is full of ink to the state illustrated in FIG. 3F. In this state, the level sensor 90 switches from the ON state described above to the OFF state.

The state illustrated in FIG. 3J in which the ink in the tank 32 has been depleted (which means that the available ink has been depleted, where in actuality, some ink may remain in the tank 32) is reached from the state illustrated in FIG. 3F via the states illustrated in FIGS. 3G, 3H, and 3I in which ink is further consumed. Throughout FIGS. 3G to 3I, the level sensor 90 remains in the OFF state.

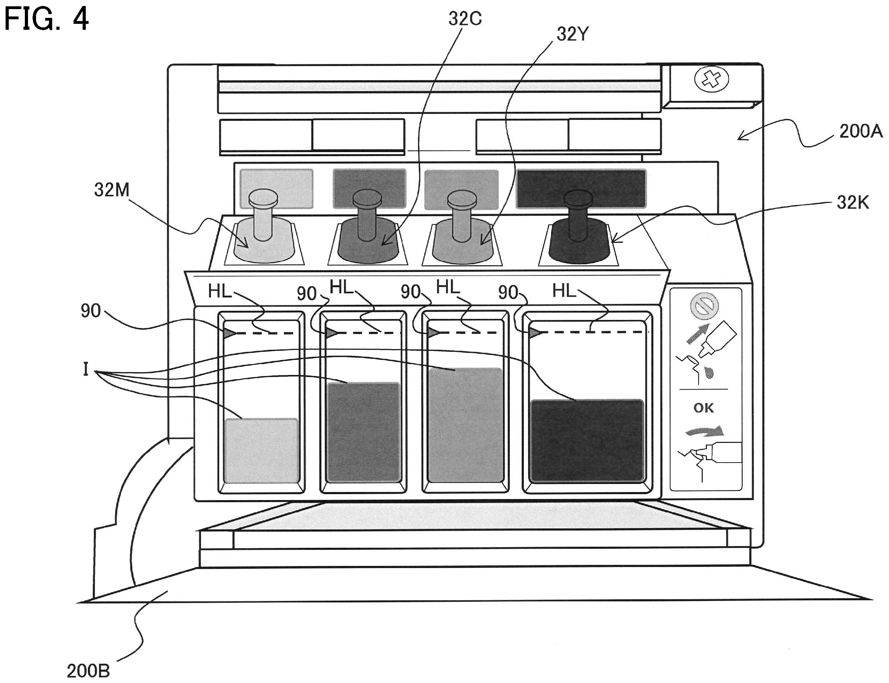

FIG. 4 illustrates the printer 200 in a state where an openable cover 200B provided on a housing 200A is open. By opening the openable cover 200B, a supply port (not shown) for the ink of the four tanks 32 described above positioned in the housing 200A can be exposed to an outside. In this example, a magenta tank 32M, a cyan tank 32C, a yellow tank 32Y, and a black tank 32K are arranged in this order from left to right. The level sensor 90 for detecting whether the liquid level I inside the tank has reached the upper reference level HL is included in each of the tanks 32M, 32C, 32Y, and 32K.

Note that, while not shown in the drawings, an open/close sensor 80 (see FIG. 1) for detecting the open/closed state of the openable cover 200B according to a well-known technique is provided in the housing 200A, for example. The open/close sensor 80 detects whether the openable cover 200B is in the open or closed state, and outputs a corresponding detection signal. The openable cover 200B is an example of the open/close member.

### < Electrical Configuration of Printing Process System 1 >

Returning to FIG. 1, the electrical configuration of the printing process system 1 will be described.

### < Information Management Server >

The information management server 100 is a server installed and managed by the service provider, for example, the manufacturer of the printer 200 or the management company of the printing service described above. The information management server 100 has a processor 110, a storage device 115, and an interface 190. The processor 110, the storage device 115, and the interface 190 are interconnected via a bus 105.

The storage device 115 includes a volatile storage device 120 and a nonvolatile storage device 130. The volatile storage device 120 is a DRAM, for example, and has a user ID storage area 121, a device number storage area 122, a printer ID storage area 124, and an ink residual-amount storage area 125. Each piece of information stored in each storage area is used to manage the use of the printing service by each printer and each user. The nonvolatile storage device 130 is a hard disk drive or a solid state drive, for example, and has a program storage area 131.

The processor 110 is a device that performs data processing, such as a CPU. By executing programs stored in the program storage area 131, the processor 110 executes various processes including a process for performing data communications with the mobile terminal 300, the printer 200, and the delivery management server 400 connected to the network NT. The program storage area 131 of the nonvolatile storage device 130, and the processor 110 which uses the program storage area 131 are each an example of the controller.

The interface 190 is a wired LAN interface or a wireless interface for communicating with other devices, and is connected to the network NT.

### < Delivery Management Server >

The delivery management server 400 is installed at a delivery service company providing a delivery service for delivering various articles including the bottle described above, for example. Although not shown in the drawings, the delivery management server 400 has a processor, a storage device, and an interface for connecting to the network NT.

### < Mobile Terminal >

The mobile terminal 300 is a smartphone or other mobile device owned by the user, and is connected to the network NT through wireless communication. The mobile terminal 300 has a processor 310, a storage device 315, an interface 390 for connecting to the network NT, a display unit 301, and an operating unit 350. Various programs are stored in the program storage area provided in the storage device. Alternatively, other information terminals such as a tablet computer or a personal computer may be used in place of the mobile terminal 300.

### < Printer >

The printer 200 includes a controller 50 for controlling operations of the printer 200, the carriage motor 56, the conveying motor 57, the level sensor 90, the open/close sensor 80, and an appropriate display unit 201.

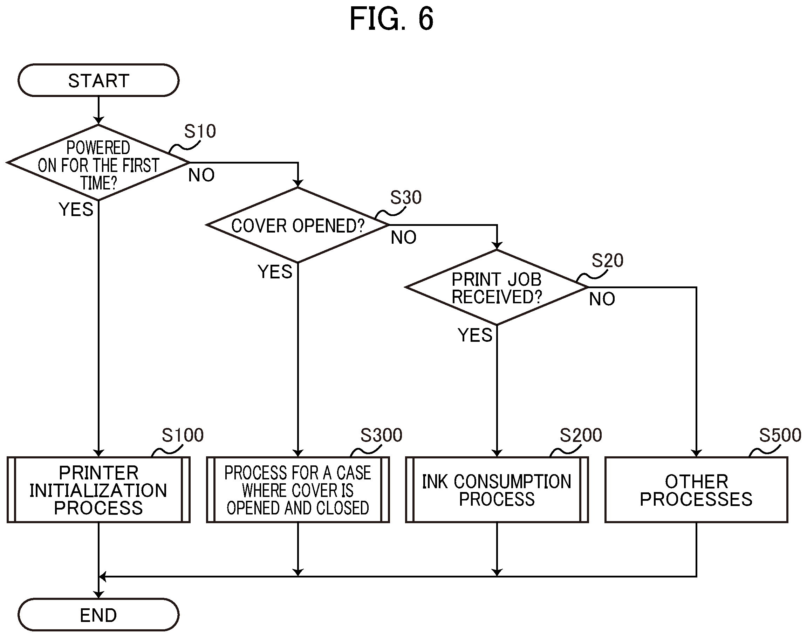

The controller 50 includes a CPU 51, a ROM 52, a RAM 53, a EEPROM 54, an application-specific integrated circuit (ASIC) 55, and an interface 60. A supply counter 126 and a sensor counter 127 are provided in the RAM 53 (described later in greater detail). The supply counter 126 and the sensor counter 127 are backed up to a nonvolatile memory such as the EEPROM 54 so that control can be continued even when the power of the printer 200 is turned off and on. The ROM 52 has a program storage area 52A. Programs stored in the program storage area 52A include programs that execute the processes illustrated in the flowcharts of FIGS. 6-8, 10, and 12-14 described later. With this configuration, the controller 50 controls the carriage motor 56 and the conveying motor 57, for example. Additionally, detection signals from the level sensor 90 and the open/close sensor 80 described above are inputted into the controller 50. Then, the controller 50 operates as the residual amount management device described later.

The interface 60 is a wired LAN interface or a wireless interface for communicating with other devices, and is connected to the network NT described above.

While the configuration in FIG. 1 illustrates a single CPU 51, the controller 50 may include a plurality of CPUs 51, and the plurality of CPUs 51 may share the processing load. Similarly, while a single ASIC 55 is illustrated in FIG. 1, the controller 50 may include a plurality of ASICs 55, and the plurality of ASICs 55 may share the processing load.

### < Background of Present Embodiment >

As described above, in the printing process system 1 of the present embodiment, when ink in the tank 32 has been consumed, a new bottle is delivered free of charge to the user without any financial burden to the user. The user manually fills the tank 32 with ink by supplying the ink inside the bottle. The entire amount of ink in the bottle can be supplied into the tank 32 by a single supplying operation performed by the user, as described above.

For example, in the state where ink is consumed by printing operations and the tank 32 is empty as illustrated in FIG. 3A, by supplying the entire amount of ink in the bottle into the tank 32, the liquid level I rises in the order of FIGS. 3A, 3B, 3C, and 3D. Ultimately, the tank 32 becomes substantially full of ink as illustrated in FIG. 3E. By printing being performed from this state, the ink is consumed, and the liquid level I changes in the order of FIGS. 3E, 3F, 3G, 3H, 3I, and 3J. Then, the tank 32 becomes empty, and bottles are delivered again.

However, when the user does not supply the entire amount of ink in the delivered bottle, either intentionally or unintentionally for some reason, the liquid level I rises in the order of FIGS. 3A, and 3B then stops at FIG. 3C, for example. In this state, when printing is performed and ink is consumed, the liquid level I changes in the order of FIGS. 3C, 3G, 3H, 3I, and 3J. Hence, in this case, even though ink is remaining in the bottle, a new bottle would be delivered within a short time-frame and the service provider would become greatly disadvantaged.

### < Features of Embodiment >

A feature of the present embodiment is the accurate detection of supply of the entirety amount of ink in the bottle for restricting the delivery of a new bottle to the user in the state where ink is remaining in the bottle as described above. Accordingly, the level sensor 90 is provided at such a position (height) that the detection signal of the level sensor 90 does not switch from the OFF state to the ON state unless the entire amount of ink in the delivered bottle is supplied into the tank 32 in the empty state, for example. Furthermore, the supply counter 126 and the sensor counter 127 described above are also provided, and, based on the detection result of the level sensor 90 and the count values of the supply counter 126 and the sensor counter 127 (described later), the supply of the entire amount of ink in the bottle into the tank 32 by the user is detected.

### < Supply Counter and Sensor Counter>

The sensor counter 127 is a counter which sets an initial value [000] for indicating the state where the detection signal of the level sensor 90 has switched from the ON state to the OFF state by the liquid level I in the tank 32 having decreased as described above, for example. The sensor counter 127 is incremented from the initial value [000] as the liquid level I decreases.

The supply counter 126 is a counter which sets an initial value [000] for indicating the state where the entire amount of ink is supplied from the bottle into the tank 32 from an empty state where ink in the tank 32 has been depleted, for example. The supply counter 126 is incremented from the initial value [000] as the liquid level I decreases.

When printing is performed, the amount of ink ejected from the plurality of nozzles 10 of the inkjet head 3, which corresponds to the printing amount, is detected according to a well-known technique, and the amount of ink consumed, calculated according to a well-known technique based on the amount of ink ejected, is obtained by the controller 50 of the printer 200. Then, a value corresponding to the obtained amount of ink consumed is added to the count values of both the supply counter 126 and the sensor counter 127.

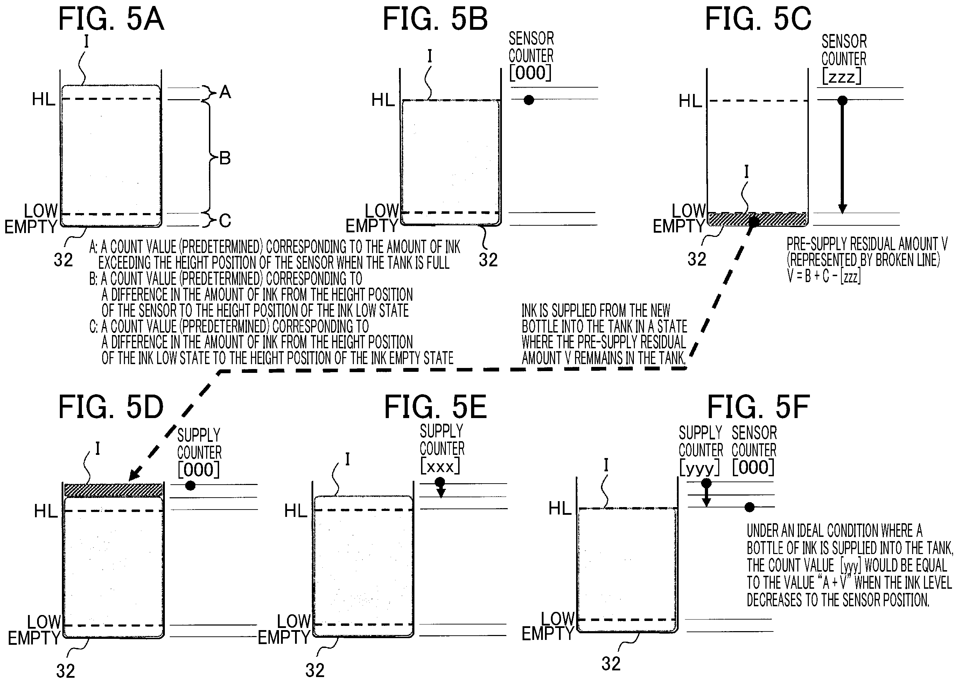

In the present embodiment, the relationship between the height of the liquid level in the tank 32 and the residual amount of ink is predetermined by design, and the detection position of the level sensor 90 in the tank 32 is also predetermined by design. Accordingly, as illustrated in FIG. 5A, a count value A corresponding to the amount of ink exceeding the height position of the level sensor 90 when the tank 32 is substantially full of ink is also predetermined by design.

Furthermore, a height position within the tank 32 representing an InkLow state where a residual amount of ink in the tank 32 is low is predetermined. Therefore, a count value B corresponding to a difference in the amount of ink from the height position of level sensor 90 to the height position corresponding to the InkLow state is also predetermined by design.

In addition, a height position within the tank 32 representing an InkEmpty state where the residual amount of ink in the tank 32 has been depleted is also predetermined. As a result, a count value C corresponding to a difference in the amount of ink from the height position corresponding to the InkLow state to the height position corresponding to the InkEmpty state is also predetermined by design.

On the other hand, as described above, the capacity of the bottle is predetermined, however in the present embodiment, as described above with reference to FIGS. 3A to 3J, by supplying the entire amount of ink in the bottle when the tank 32 is empty, the tank 32 becomes substantially full (hereinafter simply referred to as "ink full state" where appropriate). That is, the count value corresponding to the entire amount of ink of a single bottle is a predetermined value by design, i.e., A + B + C (see FIG. 5A).

### < Incremental Behavior>

The incremental behavior of the supply counter 126 and the sensor counter 127 are illustrated in FIGS. 5A to 5F.

After ink is supplied into the tank 32 and ink is consumed by printing as illustrated in FIG. 5A, and the liquid level I decreases to the upper reference level HL as illustrated in FIG. 5B, the count value of the sensor counter 127 is incremented from [000].

Additionally, in this example, when ink in the tank 32 is consumed by printing and the sensor count value reaches the value B, in other words, when the InkLow state is reached, a new bottle is automatically ordered and delivered to the user when the InkLow state described above is reached, as will be described later.

### < Principles of Detecting Supply of Entire Amount >

Suppose that, as illustrated in FIG. 5C, the ordered bottle is delivered to the user, and the user has supplied the ink in the new bottle into the tank 32 when the count value of the sensor counter 127 has increased to [zzz]. A count value V corresponding to a pre-supply residual amount immediately before ink is supplied (hereinafter simply referred to as "pre-supply residual amount V" where appropriate) is expressed as V = B + C - [zzz]. As a result, when the entire amount of ink in the newly arrived bottle has been supplied by the user as illustrated in FIG. 5D, the entire amount of ink in the bottle, i.e., A + B + C is added to the pre-supply residual amount V described above. The pre-supply residual amount V is within the range of 0 to C depending on the timing of the user supplying the ink. The upper reference level HL where the level sensor 90 is positioned is set so that the liquid level I exceeds the upper reference level HL when the entire amount of ink in the bottle is supplied even if the pre-supply residual amount is zero, and the amount of ink that exceeds the upper reference level HL is small. Accordingly, when the detection signal of the level sensor 90 switches from the ON state to the OFF state after the InkLow state has been reached, the supply of the entire amount of ink in the bottle can be detected. The above is the fundamental principle of detecting the supply of the entire amount of ink in the bottle.

When the pre-supply residual amount V is present, the detection signal of the level sensor 90 switches from the OFF state to the ON state even when a small amount of ink corresponding to the pre-supply residual amount V is not supplied and is remaining in the bottle. Therefore, further detection of the entire amount of ink not being supplied may be performed afterwards, as follows.

In a case where the entire amount of ink in the bottle, i.e., A + B + C is added to the pre-supply residual amount V described above and the count value of the supply counter 126 begins to be incremented from [000], the count value of the supply counter 126 is increased to [xxx] when the liquid level I of the ink decreases to the ink full state as illustrated in FIG. 5E as a result ink being consumed by printing. Thereafter, when the liquid level I of the ink decreases to the upper reference level HL, the count value of the supply counter 126 is increased to [yyy]. As described above, when it is assumed that the entire amount of ink in the bottle has been supplied by the user as described above, the value [yyy] would be equal to the sum of A and V described above, in other words, [yyy] = A + V.

However, in a case where the entire amount of ink in the bottle is not supplied, in a state corresponding to the state illustrated in FIG. 5D, the position of the liquid level I would be below that illustrated in FIG. 5D, therefore, the value [yyy] would satisfy the inequality [yyy] < A + V. Although in actuality variations described later are to be taken into account, in a case where the count value of the supply counter when the detection signal of the level sensor 90 switches from the ON state to the OFF state is smaller than an appropriate range, the entire amount of ink not being supplied is detected afterwards.

### < Control Procedure >

Next, an example of a control procedure executed by the controller 50 of the printer 200 for achieving the method described above will be described with reference to the flowchart illustrated in FIG. 6.

### < Main Flow >

In the main flow illustrated in FIG. 6, first in S10 the controller 50 determines whether a determination process is to be performed for the first time after the printer 200 has been powered on. When the determination process is not performed for the first time after the printer 200 has been powered on (S10: NO), the controller 50 advances to S30 described later. When the determination process is to be performed for the first time after the printer 200 has been powered on (S10: YES), in S100 the controller 50 executes a printer initialization process (described later in greater detail), then ends the process in FIG. 6.

In S30 the controller 50 determines whether the openable cover 200B has been opened based on the results of the open/close sensor 80 of the printer 200. When the openable cover 200B has not been opened (S30: NO), the controller 50 advances to S20 described later. When the openable cover 200B has been opened (S30: YES), in S300 the controller 50 executes a process for a case where the cover is opened and closed (described later in greater detail), then ends the process in FIG. 6.

In S20 the controller 50 determines whether ink has been consumed. The consumption of ink refers to ink consumption by printing, as well as ink consumption during maintenance such as purges. When ink has not been consumed (S20: NO), the controller 50 advances to S500 described later. When a print job exists (S20: YES), in S200 the controller 50 executes an ink consumption process (described later in greater detail), then ends the process in FIG. 6.

In S500 the controller 50 executes other processes which do not correspond to the processes in S100, S200, or S300, then ends the process in FIG. 6.

### < Printer Initialization Process >

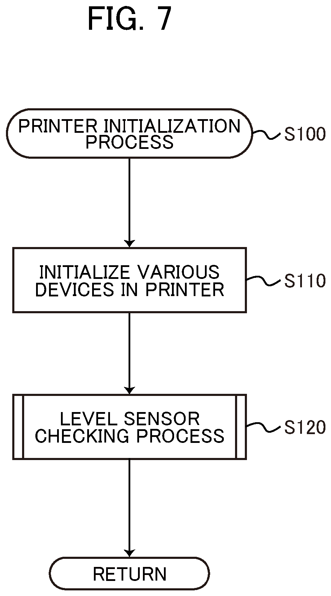

Details of the printer initialization process of S100 are illustrated in FIG. 7. First, in S110 of FIG. 7 the controller 50 executes a predetermined initialization process for the various operating devices, display devices, and other devices of the printer 200. Then, in S120 the controller 50 executes a level sensor checking process and ends the routine in FIG. 7. The level sensor checking process in S120 is included in the printer initialization process of S100 since there may be a case where ink is supplied into the tank 32 when the power is OFF, depending on the user.

### < Level Sensor Checking Process >

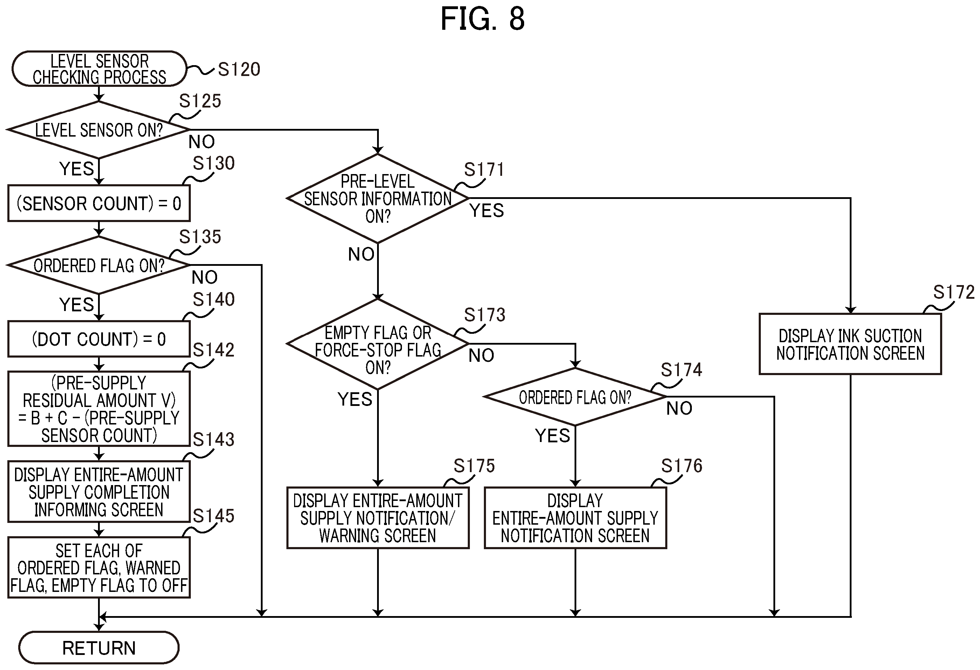

Details of the level sensor checking process in S120 are illustrated in FIG. 8. First, in S125 the controller 50 determines whether the level sensor 90 is in the ON state. In other words, the controller 50 determines whether the liquid level I inside the tank is at a position equal to or higher than the upper reference level HL. When the level sensor 90 is in the OFF state, i.e., when the liquid level I is at a position lower than the upper reference level HL (S125: NO), the controller 50 advances to S171 described later. When the level sensor 90 is in the ON state, i.e., when the liquid level I is at a position equal to or higher than the upper reference level HL (S125: YES), the controller 50 advances to S130.

In S130 the controller 50 resets the count value of the sensor counter 127 (hereinafter referred to as "sensor count". This notation will be used in the drawings) to 0. At this time, the controller 50 stores the sensor count separately as a pre-supply sensor count before the resetting.

In S135 the controller 50 determines whether an ordered flag indicating that an order of the bottle of ink has been placed is set to "ON". When the ordered flag is set to "OFF" (S135: NO), the controller 50 ends the routine in FIG. 8. When the ordered flag is set to "ON" (S135: YES), the controller 50 advances to S140. In a case where the level sensor 90 is in the ON state and the ordered flag is set to "ON" when the power is turned ON, it is assumed that the ordered bottle has been delivered to the user and ink has been supplied into the tank 32 while power is OFF. A case where the ink bottle determined to have been ordered in S135 indicates that the sensor count has become greater than or equal to a first threshold value (refer to S220 and S260). The process executed in S125 and S130 are each an example of the third determining process.

In S140 the controller 50 resets the count value of the supply counter 126 (hereinafter referred to as "dot count". This notation will be used in the drawings) to 0.

In S142 the controller 50 defines the pre-supply residual amount V described above as a value obtained by subtracting the pre-supply sensor count (the sensor count prior to being reset in S130) from the sum of the known values B and C described above. This treatment assumes that the entire amount of ink of one bottle has been supplied into the tank 32.

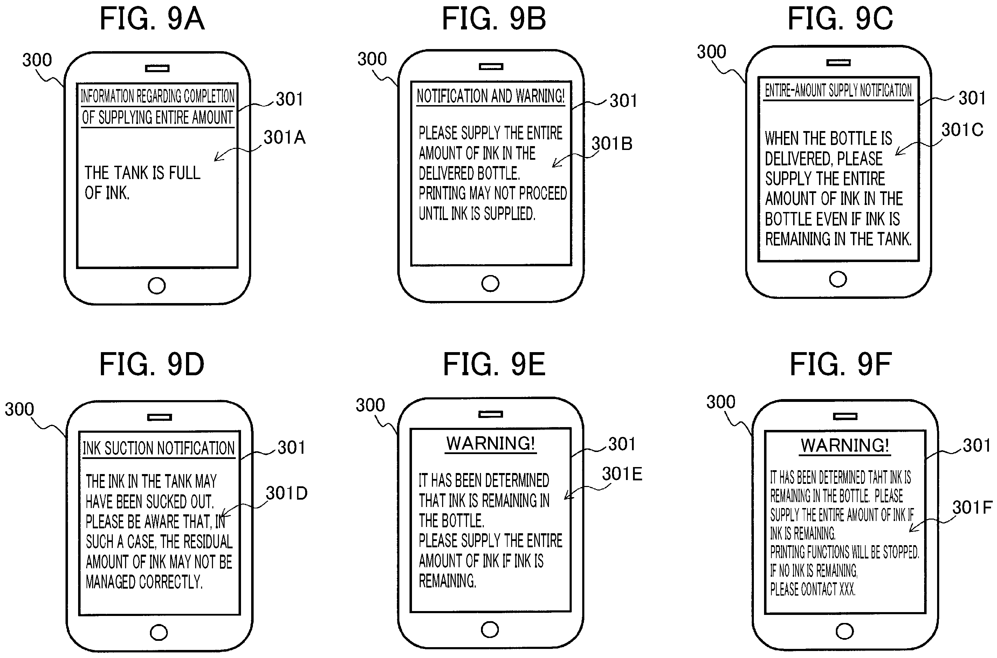

In S143 the controller 50 displays an entire-amount supply completion informing screen on the display unit 301 of the mobile terminal 300 or the display unit 201 of the printer 200 described above. The entire-amount supply completion informing screen indicating the completion of the supply of the entire amount of ink in the bottle. For example, by mounting an embedded web server (EWS) on the printer 200, and sending display data to a browser of the mobile terminal 300, the display data can be displayed on the display unit 301 of the mobile terminal 300. A sample display is illustrated in FIG. 9A. As illustrated in FIG. 9A, in this example, an entire-amount supply completion informing screen 301A including a message "The tank is full of ink." is displayed on the display unit 301 of the mobile terminal 300. The displayed message is an example of the entire-amount supply completion information, and the process executed in S143 is an example of the entire-amount supply completion process.

In S145 the controller 50 sets each of the ordered flag described above, a warned flag, and an Empty flag to "OFF". As described later, the warned flag indicates that a warning has been issued, and the Empty flag indicates that the ink in the tank has been nominally depleted. The process executed in S145 is an example of the printing allowance process. After executing S145, the controller 50 ends the routine in FIG. 8.

In S171 the controller 50 determines whether a pre-level sensor information (described later) stored at this time is ON. When the pre-level sensor information is ON (S171: YES), the controller 50 advances to S172 described later. When the pre-level sensor information is OFF (S171: YES), the controller 50 advances to S173.

In S173 the controller 50 determines whether the Empty flag (described above) or a force-stop flag is set to "ON". As described later, the force-stop flag is a flag for forcibly stopping printing operations. When at least one of the flags is set to "ON" (S173: YES), the controller 50 advances to S175.

In S175 the controller 50 displays an entire-amount supply notification/warning screen on the display unit 301 of the mobile terminal 300 or the display unit 201 of the printer 200. A sample display is illustrated in FIG. 9B. The entire-amount supply notification/warning screen is a screen requesting a supply of the entire amount of ink as well as issuing a warning. As illustrated in FIG. 9B, in this example, an entire-amount supply notification/warning screen 301B including a message "Please supply the entire amount of ink in the delivered bottle. Printing cannot be performed without supplying the entire amount of ink." is displayed on the display unit 301 of the mobile terminal 300. It is conceivable that the user may have attempted to supply the entire amount of ink in the bottle into the tank, but may not supply the entire amount of ink due to an operational error made during supply, such as spilling ink. Therefore, the entire-amount supply notification/warning screen 301B may include a message "Please supply the entire amount of ink in the delivered bottle. Printing cannot be performed without supplying the entire amount of ink. If the entire amount of ink cannot be supplied, please contact XXX." The displayed message is an example of the supply-failure-case guidance information, and in this case, the process executed in S175 is an example of the supply-failure-case guidance process. After executing S175, the controller 50 ends the routine in FIG. 8.

When both the Empty flag and the force-stop flag are set to "OFF" (S173: NO), the controller 50 advances to S174. In S174, similar to S135 described above, the controller 50 determines whether the ordered flag is set to "ON". When the ordered flag is set to "OFF" (S174: NO), the controller 50 ends the routine in FIG. 8. When the ordered flag is set to "ON" (S174: YES), the controller 50 advances to S176.

In S176 the controller 50 displays an entire-amount supply notification screen on the display unit 301 of the mobile terminal 300 or the display unit 201 of the printer 200. The entire-amount supply notification screen is a screen requesting a supply of an entire amount of ink. A sample display is illustrated in FIG. 9C. As illustrated in the FIG. 9C, in this example, an entire-amount supply notification screen 301C including a message "When the bottle is delivered, please supply the entire amount of ink in the bottle even if ink is remaining in the tank." is displayed on the display unit 301 of the mobile terminal 300. Additionally, it is conceivable that the user may have attempted to supply the entire amount of ink in the bottle into the tank 32, but may not supply the entire amount of ink due to an operational error made during supply such as spilling ink. As such, a message "When the bottle is delivered, please supply the entire amount of ink in the bottle even if ink is remaining in the tank. If the entire amount of ink cannot be supplied, please contact XXX." may be displayed as the entire-amount supply notification screen 301C. The displayed message is an example of the supply-failure-case guidance information, and in this case, the process executed in S176 is an example of the supply-failure-case guidance process. After executing S176, the controller 50 ends the routine in FIG. 8.

The process of S172 is performed to handle a possible case where abnormalities may occur, such as a case where the ink level I in the tank 32 may decrease to below the upper reference level HL due to ink being sucked out from the tank 32 while the power is off or the openable cover 200B is open. Accordingly, in S172 the controller 50 displays an ink suction notification screen on the display unit 301 of the mobile terminal 300 or the display unit 201 of the printer 200. The ink suction notification screen is a screen notifying the suction of ink. A sample display is illustrated in FIG. 9D. As illustrated in FIG. 9C, in this example, an ink suction notification screen 301D including a message "The ink in the tank may have been sucked out. Please be aware that, in such a case, the residual amount of ink may not be managed correctly." is displayed on the display unit 301 of the mobile terminal 300. After executing S172, the controller 50 ends the routine in FIG. 8.

### < Process for a case where the cover is opened and closed >

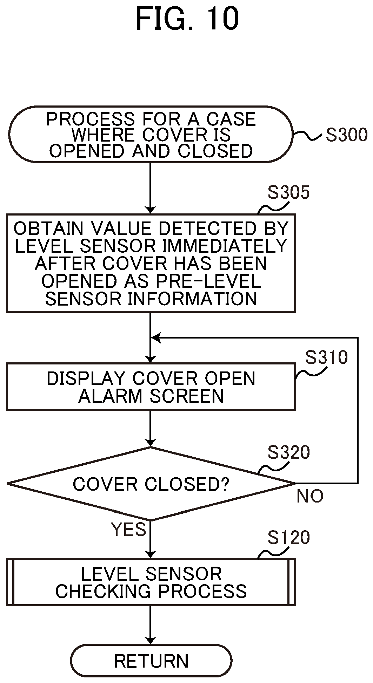

Details of the process for a case where the cover is opened and closed in S300 are illustrated in FIG. 10. First, in S305 the controller 50 obtains the value detected by the level sensor 90 immediately after the openable cover 200B has been opened as the pre-level sensor information, which is then stored in a suitable location.

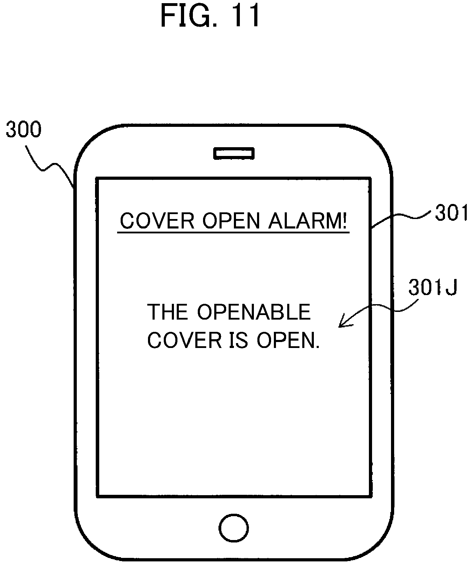

In S310 the controller 50 displays a cover open alarm screen on the display unit 301 of the mobile terminal 300 or the display unit 201 of the printer 200. The cover open alarm screen indicates that the openable cover 200B is open. A sample display is illustrated in FIG. 11. In this example, a cover open alarm screen 301J including a message "The cover is open." is displayed.

In S320 the controller 50 determines whether the openable cover 200B has been closed based on a detection result of the open/close sensor 80. When the openable cover 200B has not been closed (S320: NO), the controller 50 returns to S310. When the openable cover 200B has been closed (S320: YES), the controller 50 executes the level sensor checking process in S120 described above and ends the routine in FIG. 10.

### < Ink Consumption Process >

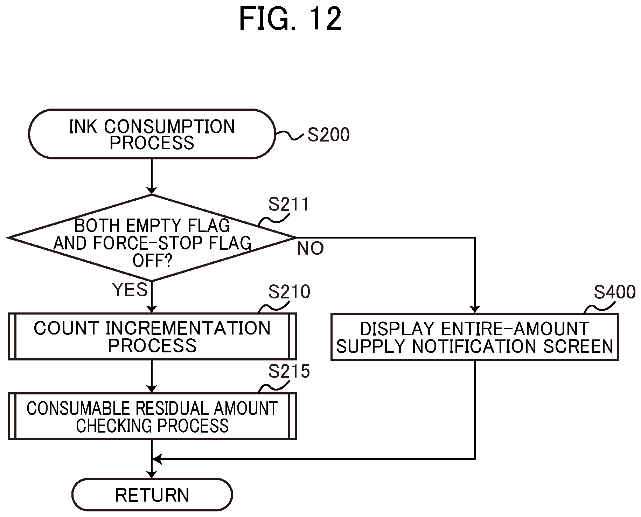

Details of the ink consumption process in S200 are illustrated in FIG. 12. First, in S211 the controller 50 determines whether both the Empty flag and the force-stop flag described above are set to "OFF". When at least one of the flags is set to "ON" (S211: NO), the controller 50 advances to S400 described later. In S400 the controller 50 displays a screen similar to the entire-amount supply notification/warning screen 301B illustrated in FIG. 9B described above on the display unit 301 of the mobile terminal 300 or the display unit 201 of the printer 200. When both the Empty flag and the force-stop flag are set to "OFF" (S211: YES), the controller 50 advances to S210, and executes a count incrementation process.

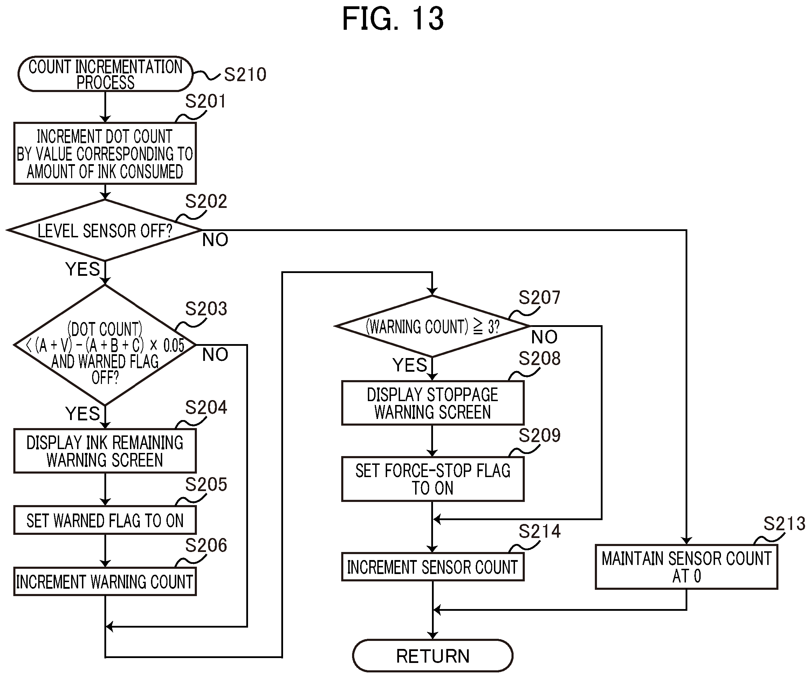

Details of the count incrementation process in S210 are illustrated in FIG. 13. First, in S201 the controller 50 obtains the amount of ink consumed based on the amount of ink ejected from the inkjet head 3 described above, and a count value corresponding to the amount of ink consumed is added to the dot count of the supply counter 126. The process executed in S201 is an example of the printing amount obtaining process, and the obtained amount of ink consumed is an example of the printing-amount information.

In S202 the controller 50 determines whether the level sensor 90 is in the OFF state. When the level sensor 90 is in the ON state (S202: NO), in S213 the controller 50 advances to S213 described later. When the level sensor 90 is in the OFF state (S202: YES), the controller 50 advances to S203.

In S203, the controller 50 determines whether the dot count at this time satisfies Expression (1) shown in below and the warned flag is set to "OFF". Here, Expression (1) uses the values A, B, and C described above and the pre-supply residual amount V, as follows: $Dot Count < \left(A+V\right) - \left(A+B+C\right) \times 0.05$

The technical significance of Expression (1) described above is as follows. The dot count is merely a count by software, and even with the same dot count, variations in the actual amount of ink consumed may become apparent. This variation occurs due to individual differences of the printer, printing environments such as temperature, and whether the images to be printed are characters or images.

For example, in the calculation of the pre-supply residual amount V described above, if the count value counted from the upper reference level HL includes a maximum of 5 % variation, the variation is equal to: $\left(B+C-V\right) \times 0.05$

A variation occurred a period from a time when the ink is supplied from the bottle to a time when the liquid level I decreases to the upper reference level HL is equal to: (A + V) × 0.05 (Expression (3)).

Therefore, starting from a state where the liquid level I decreases from the upper reference level HL before ink is supplied, if the ink in the tank 32 becomes low and ink is supplied from a new bottle and the tank is filled with the ink, and thereafter the liquid level I decreases to the upper reference level HL again, the total variation will be the sum of Expression (2) and Expression (3), i.e., is equal to: (B + C - V) × 0.05 + (A + V) × 0.05 = (A + B + C) × 0.05 (Expression (4)).

In other words, a variation of 5 % of A + B + C corresponding to one bottle is present. In Expression (1) described above, the value (A + B + C) × 0.05 is subtracted at the time of determination to account for the variation described above. Note that 0.05 in the above Expressions assumes a variation of 5 % as described above and is merely an example, and other values may be used as appropriate.

When the dot count satisfies the relation: Dot count ≥ (A + V) - (A + B + C) × 0.05, or the warned flag is set to "ON" (S203: NO), the controller 50 advances to S207 described later. When the dot count satisfies the relation: Dot Count < (A + V) - (A + B + C) × 0.05, and the warned is set to "OFF" (S203: YES), the controller 50 advances to S204.

In S204 the controller 50 displays an ink remaining warning screen on the display unit 301 of the mobile terminal 300 or the display unit 201 of the printer 200. The ink remaining warning screen is a screen notifying that ink is remaining in the bottle. A sample display is illustrated in FIG. 9E. As illustrated in FIG. 9E, in this example, an ink remaining warning screen 301E including a message "It has been determined that ink is remaining in the bottle. Please supply the entire amount of ink if ink is remaining." is displayed on the display unit 301 of the mobile terminal 300. The displayed message is an example of the supply warning information, and the process executed in S204 is an example the supply warning process.

In S205 the controller 50 sets the warned flag described above to "ON", and in S206 the controller 50 increments a warning count representing the number of times a warning has been issued by 1.

In S207 the controller 50 determines whether the warning count at this time is greater than or equal to 3. When the warning count is less than or equal to 2 (S207: NO), the controller 50 advances to S214 described later. When the warning count is greater than or equal to 3 (S207: YES), the controller 50 advances to S208.

In S208 the controller 50 displays a stoppage warning screen on the display unit 301 of the mobile terminal 300 or the display unit 201 of the printer 200. The stoppage warning screen is a screen for warning that printing has been forcibly stopped due to the number of warnings having reached 3. A sample display is illustrated in FIG. 9F. As illustrated in FIG. 9F, in this example, a stoppage warning screen 301F including a message "It has been determined that ink is remaining in the bottle. Please supply the entire amount of ink if ink is remaining. Printing functions will be stopped. If no ink is remaining, please contact XXX." is displayed on the display unit 301 of the mobile terminal 300.

In S209 the controller 50 sets the force-stop flag described above to "ON". The process executed in S209 is an example of the forced printing prohibiting process. In S214, the controller 50 adds the same count value as in S201 to the sensor count of the sensor counter 127, and ends the routine in FIG. 13. The process executed in S214 is also an example of the printing amount obtaining process, and the obtained amount of ink consumed is also an example of the printing-amount information. In S213 the controller 50 maintains the sensor count of the sensor counter 127 at 0, and ends the routine in FIG. 13.

Returning to FIG. 12, after completion of the count incrementation process of S210 described above, the controller 50 advances to S215, and executes a consumable residual amount checking process.

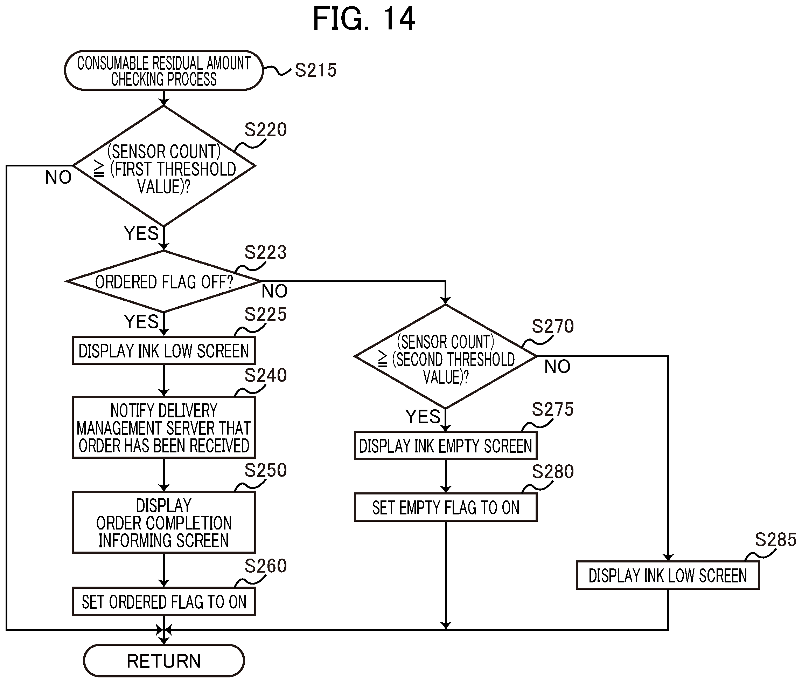

Details of the consumable residual amount checking process in S215 are illustrated in FIG. 14. First, in S220 the controller 50 determines whether the sensor count of the sensor counter 127 is greater than or equal to a first threshold value. The first threshold value is a predetermined threshold value corresponding to a case where the ink in the tank 32 becomes low and has been nearly depleted. The process executed in S220 is an example of the first determining process. When the sensor count of the sensor counter 127 is less than the first threshold value (S220: NO), the controller 50 ends the routine in FIG. 14. When the sensor count of the sensor counter 127 is greater than or equal to the first threshold value (S220: YES), the controller 50 advances to S223. In S223 the controller 50 determines whether the ordered flag is set to "OFF". When the ordered flag is set to "ON" (S223: NO), the controller 50 advances to S270 described later. When the ordered flag is set to "OFF" (S223: YES), the controller 50 advances to S225.

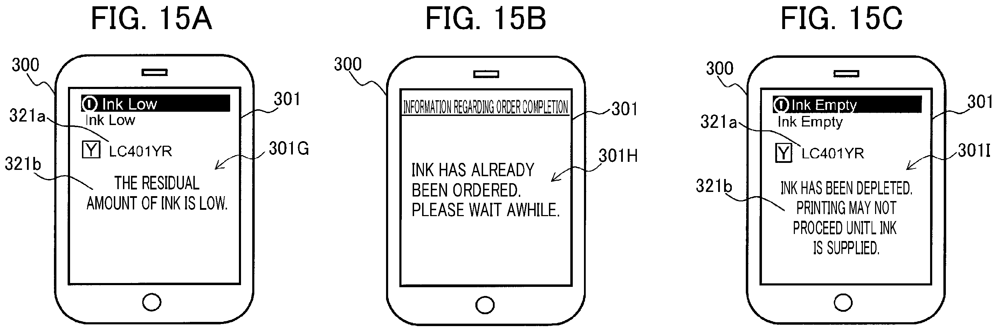

In S225 the controller 50 displays an InkLow screen on the display unit 301 of the mobile terminal 300 or the display unit 201 of the printer 200. The InkLow screen is a screen indicating that the residual amount of ink is low. A sample display is illustrated in FIG. 15A. In this example, an InkLow screen 301G includes an ink display part 321a displaying the color for which the residual amount of ink is low, and a message display part 321b displaying "The residual amount of ink is low." The displayed message is an example of the first residual amount information, and the process executed in S225 is an example of the first residual amount information outputting process.

Returning to FIG. 12, in S240 the controller 50 notifies the delivery management server 400 that an order placed by the user has been received. The process executed in S240 is an example of the order instruction transmitting process. Note that the controller 50 may, instead of sending directly to the delivery management server 400, transmits the order instruction signal temporarily to the information management server 100, then have the information management server 100 compile the signal and issue a delivery instruction for the corresponding bottle(s) to the delivery management server 400.

In S250 the controller 50 displays an order completion informing screen on the display unit 301 of the mobile terminal 300 or the display unit 201 of the printer 200. The order completion informing screen is a screen indicating that the bottle has already been ordered. A sample display is illustrated in FIG. 15B. As illustrated in FIG. 15B, in this example, an order completion informing screen 301H including a message "Ink has already been ordered. Please wait awhile." is displayed. In S260 the controller 50 sets the ordered flag described above to "ON". After executing S260, the controller 50 ends the routine in FIG. 14.

In S270 the controller 50 determines whether the sensor count of the sensor counter 127 is greater than or equal to a second threshold value. The second threshold value is a predetermined threshold value corresponding to an empty state where the ink inside the tank 32 has been depleted. The process executed in S270 is an example of the second determining process. When the sensor count is less than the second threshold value (S270: NO), the controller 50 advances to S285. In S285, similar to S225, the controller 50 displays the InkLow screen and ends the routine in FIG. 14. When the sensor count is greater than or equal to the second threshold value (S270: YES), the controller 50 advances to S275.

In S275 the controller 50 displays an InkEmpty screen on the display unit 301 of the mobile terminal 300 or the display unit 201 of the printer 200. The InkEmpty screen is a screen indicating that the residual amount of ink has been depleted. A sample display is illustrated in FIG. 15C. In this example, an InkEmpty screen 301I includes the ink display part 321a displaying the color of ink which has been depleted, and the message display part 321b displaying a message "Ink has been depleted. Printing may not proceed until ink is supplied." The message displayed is an example of the second residual amount information, and the process executed in S275 is an example of the second residual amount information outputting process.

In S280 the controller 50 sets the Empty flag described above to "ON". The process executed in S280 is an example of the printing prohibiting process. After executing S280, the controller 50 ends the routine in FIG. 14.

### < Effects of Embodiment >

As described above, according to the present embodiment, the level sensor 90 capable of detecting the level of ink inside the tank 32 of the printer 200 is provided at the upper portion of the tank 32. When image formation is performed by the printer 200, ink in the tank 32 is consumed and the liquid level I of ink decreases. In S201 the controller 50 obtains the amount of ink consumed by the image formation. After the level of ink in the tank 32 decreasing from at or above the upper reference level HL to below the upper reference level HL is detected using the level sensor 90, a current estimated residual amount of ink is calculated using the amount of ink consumed obtained in S201 described above.

When ink in the tank 32 is consumed and reaches the empty state where the tank 32 is nominally empty, printing cannot be performed. To address this situation, in the present embodiment, a second threshold value for the residual amount of ink is set. In S270 the controller 50 determines whether the current estimated residual amount described above has reached the second threshold value. When the current estimated residual amount has reached the second threshold value (S270: YES), in S280 the controller 50 sets the Empty flag to "ON", prohibiting image formation.

On the other hand, in the present embodiment, to ensure the supply of the entire amount of ink in the bottle to the tank 32 for each supply operation, it is assumed that, in an ideal situation for example, new ink from the bottle is supplied into the tank 32 when the ink in the tank 32 has been consumed and the residual amount of ink has decreased to a certain extent. For such a purpose, a first threshold value for the residual amount of ink is set. By performing the process of S220 the controller 50 determines whether the current estimated residual amount described above has reached the first threshold value.

After ink has been consumed and in S220 the current estimated residual amount is determined to have reached the first threshold value described above, the process of S125 is performed. In S125 the entire amount of ink in the bottle is determined to be supplied into the tank 32 based on detection, by the level sensor 90 provided at the upper portion of the tank 32, that the level of ink in the tank 32 has increased from below the upper reference level HL to at or above the upper reference level HL. When in S125 the entire amount of ink is determined to be supplied, in S145 controller 50 permits image formation.

According to the present embodiment, when the user supplies the tank 32 with ink from the bottle in response to ink consumption, when the entire amount of ink in the tank 32 has been supplied, subsequent printing can also be performed. Therefore, the supply of the entire amount of ink in the bottle into the tank 32 can be accurately detected.

In the embodiment, in a case where in S220 the current estimated residual amount is determined to have reached the first threshold value, and thereafter in S125 the entire amount of ink is determined to be supplied, the entire-amount supply completion information indicating that the completion of supply of the entire amount is outputted in S143. Accordingly, recognition of supply of the entire amount can be notified, and informing the user that printing can be performed is made possible.

In the embodiment, the level sensor 90 is provided at the upper portion of the tank 32. However, it is conceivable that the liquid level I of the ink may exceed the upper reference level HL even if the entire amount of ink in the bottle is not supplied and a portion of ink remains in the bottle. To handle such situations, in the present embodiment, in a case where the level of ink has reached the first threshold, and thereafter, without the level reaching the second threshold, in S125 the entire amount is determined to be supplied, in S203 the controller 50 checks the timing at which the level of ink in the tank 32 decreases to below the upper reference level HL. When the level of ink in the tank 32 decreases to below the upper reference level HL earlier than expected, even if in S125 described above the entire amount is determined to be supplied, it is later identified that the supply of the entire amount has not actually been performed, and in S204 the controller 50 issues the message described above as the supply warning information (see FIG. 9E). By issuing a warning that the supply of the entire amount has not been recognized, the user can reliably be notified that the entire amount of ink in the bottle has not been supplied into the tank 32.

In the embodiment, in a case where the level of ink in the tank 32 does not increase from below the upper reference level HL to at or above the upper reference level HL after the supply warning process, the supply warning information in S204 is repeatedly displayed at a predetermined timing after the start of image formation. By repeatedly issuing a warning that supply of the entire amount has still not been recognized, the user can be notified that the entire amount of ink in the bottle has not been supplied into the tank 32.

In the embodiment, that in S209 the force-stop flag is set to "ON" when the number of repeated executions of the warning of S204 is greater than or equal to a predetermined threshold value (3 in the example described above). By forcibly stopping printing when the user does not respond to the warnings, disadvantages to the service provider can be reliably avoided.

In the embodiment, the controller 50 displays the ink suction notification screen 301D in exceptional situations such as a situation that while the openable cover 200B is opened and closed, the level of ink in the tank 32 decreases from at or above the upper reference level HL to below the upper reference level HL without ink being consumed. Accordingly, the possibility of ink having been sucked from the tank 32 can be notified to the user.

In the embodiment, as described above, the first threshold value for the residual amount of ink is set to correspond to a state where, for example, the residual amount of ink in the tank 32 has decreased to a certain extent. When ink is consumed and the estimated residual amount reaches the first threshold value, in S225 the controller 50 displays a message corresponding to the InkLow screen 301G. Therefore, the user can be notified that the residual amount of ink is low. Additionally, since supply of the entire amount is guaranteed in S125, the timing at which the first threshold value described above has been reached can be accurately detected. As a result, the user described above can be notified with greater accuracy.

In the embodiment, when in S220 the current estimated residual amount is determined to reach the first threshold value described above, in S240 the controller 50 transmits an order instruction for the ink to the delivery management server 400. Since the order for ink is automatically placed when the residual amount of ink becomes low, efforts from the user can be eliminated. In addition, since supply of the entire amount is guaranteed in S125, it is possible to avoid a possible situation in which the next bottle is delivered to the user, even though the ink has not been depleted, due to an order automatically placed while being uncertain whether supply of the entire amount has been performed.

In the embodiment, as described above, the second threshold value for the residual amount of ink is set to correspond to a state where, for example, the tank 32 is nominally empty. When ink is consumed and the estimated residual amount reaches the second threshold value, in S275 the controller 50 displays a message corresponding to the InkEmpty screen 301I. Accordingly, the user can be notified that the tank 32 is nominally empty. Moreover, since supply of the entire amount is guaranteed in S125, the timing at which the second threshold value described above has been reached can be accurately detected. As a result, the user described above can be notified with greater accuracy.

### <Variations >

The present invention is not limited to the embodiments described above, and may include various modifications and variations such as those described below:

For example, in the description above, the controller 50 of the printer 200 operates as an example of the residual amount management device by executing each of the steps shown in FIGS. 6 to 8, 10, and 12 to 14; however, the information management server 100 may operate as an example of the residual amount management device by executing steps equivalent to those described above. In a case where the information management server 100 is to be operated as the residual amount management device, the display may be displayed on the display unit 301 using a browser of the mobile terminal 300. Additionally, the mobile terminal 300 may operate as an example of the residual amount management device by executing steps equivalent to those described above.

Furthermore, a single device may not operate as the residual amount management device, and instead a residual amount management system may be configured of multiple devices, such as the information management server 100, the printer 200, the mobile terminal 300, and other devices interacting with each other to execute each of the procedures shown in FIGS. 6 to 8, 10, and 12 to 14 described above.

Moreover, in the above description, ink is used as an example of the printing consumable but is not limited to this configuration. For example, if the printer 200 to be used is a laser printer instead of an inkjet printer, toner would be an example of the printing consumable.

Additionally, flowcharts illustrated in FIGS. 6 to 8, 10, and 12 to 14 are not intended to limit the present invention to the steps shown therein, and steps may be added or deleted or the order of steps may be changed within the scope of and technical concept of the disclosure. In particular, although the above embodiment uses the supply counter 126 and the sensor counter 127, other counting methods may also be used. For example, the supply counter may be used without the sensor counter 127. Alternatively, a down counting counter may be used, the count value of which decreases as ink is consumed.

The various components illustrated in the above embodiments and drawings may be modified and improved without departing from the spirit of the invention, the scope of which is defined by the attached claims, in terms of the numerical values, or the structure or chronological relationships of the various components.

In addition to what has already been described, the methods according to the embodiment and its variations described above may be used in suitable combinations.

The object of the present invention and the effects of the invention are not limited to those described above. That is, the present invention may resolve issues or achieve effects not described above, or may resolve some of the issues or achieve some of the effects described above.

In addition, although not illustrated individually, the present invention may be implemented with various modifications without departing from the spirit of the invention.

### [Reference Signs List]

1: printing process system 1
2: carriage
3: inkjet head
32: tank
80: open/close sensor
90: level sensor
100: information management server
110: processor
200: printer (an example of the printing device, an example of the residual amount management device)
200B: openable cover (an example of the open/close portion)
300: mobile terminal
310: processor
HL: upper reference level
P: recording sheet (an example of a print medium)

## Claims

1. A residual amount management device for managing a residual amount of a printing consumable for a print device, the print device including: a tank configured to store a printing consumable supplied from a storage body having a predetermined capacity for storing the printing consumable; a level sensor configured to detect whether a level of the printing consumable in the tank is higher than or equal to an upper reference level, the upper reference level corresponding to an upper portion of the tank in a vertical direction; and a printing unit configured to perform image formation on a printing medium by using the printing consumable in the tank, the upper reference level being set to such a height that the level of the printing consumable does not reach the height unless an entire amount of the printing consumable corresponding to the predetermined capacity is supplied into the tank in an empty state,
the residual amount management device being configured to perform:
a printing amount obtaining process including:
obtaining printing-amount information indicating a printing amount of the printing consumable consumed by the image formation using the printing unit;
a first determining process after detection, by the level sensor, that the level of the printing consumable in the tank has decreased from at or above the upper reference level to below the upper reference level, the first determining process including:
determining whether an estimated residual amount reaches a first threshold value, the estimated residual amount being calculated based on the printing-amount information obtained in the printing amount obtaining process;
a second determining process after the detection, by the level sensor, that the level of the printing consumable in the tank has decreased from at or above the upper reference level to below the upper reference level, the second determining process including:
determining whether the estimated residual amount reaches a second threshold value;
a printing prohibiting process in a case where the estimated residual amount is determined to reach the second threshold value in the second determining process, the printing prohibiting process including:
prohibiting the image formation using the printing unit;
a third determining process in response to detection, by the level sensor, that the printing consumable has increased from below the upper reference level to at or above the upper reference level after the estimated residual amount is determined to reach the first threshold value in the first determining process, the third determining process including:
determining that the entire amount of the printing consumable in the storage body is supplied into the tank; and
a printing allowance process in a case where the estimated residual amount is determined to reach the second threshold value in the second determining process and the printing prohibiting process is performed, and thereafter the entire amount of the printing consumable in the storage body is determined to be supplied into the tank in the third determining process, the printing allowance process including:
allowing the image formation using the printing unit.

2. The residual amount management device according to claim 1, configured to further perform:
an entire-amount supply completion process in a case where the estimated residual amount is determined to reach the first threshold value in the first determining process and thereafter the entire amount of the printing consumable in the storage body is determined to be supplied into the tank in the third determining process, the entire-amount supply completion process including:
outputting entire-amount supply completion information indicating completion of supplying the entire amount.

3. The residual amount management device according to claim 1, configured to further perform, in a case where the estimated residual amount is determined to reach the first threshold value in the first determining process and thereafter the entire amount of the printing consumable in the storage body is determined to be supplied into the tank in the third determining process without the estimated residual amount being determined to reach the second threshold value in the second determining process:
a supply warning process in response to the printing consumable decreasing from at or above the upper reference level to below the upper reference level earlier than expected, the supply warning process including:
outputting supply warning information, the supply warning information being for issuing a warning prompting supply of the printing consumable.

4. The residual amount management device according to claim 3,
wherein in a case where the printing consumable has not increased from below the upper reference level to at or above the upper reference level after the supply warning process, the supply warning process is repeatedly performed at a prescribed timing after start of image formation.

5. The residual amount management device according to claim 4, configured to further perform:
a forced printing prohibiting process in a case where the number of times the supply warning process is performed is greater than or equal to a predetermined threshold value, the forced printing prohibiting process including:
forcedly prohibiting image formation using the printing unit.

6. The residual amount management device according to claim 1, configured to further perform:
a supply-failure-case guidance process in a case where the estimated residual amount is determined to reach the first threshold value in the first determining process and thereafter the third determining process including the determining that the entire amount of the printing consumable in the storage body is supplied into the tank is not performed, the supply-failure-case guidance process including:
outputting supply-failure-case guidance information corresponding to a case where a portion of the printing consumable fails to be supplied due to an error occurring while supplying the printing consumable into the tank.

7. The residual amount management device according to claim 1, configured to further perform:
a first residual amount information outputting process in a case where the estimated residual amount is determined to reach the first threshold value in the first determining process, the first residual amount information outputting process including:
outputting first residual amount information indicating that a residual amount of the printing consumable in the tank is low.

8. The residual amount management device according to claim 1, configured to further perform:
an order instruction transmitting process in a case where the estimated residual amount is determined to reach the first threshold value in the first determining process, the order instruction transmitting process including:
transmitting an instruction to place an order for a printing consumable.

9. The residual amount management device according to claim 1, configured to further perform:
a second residual amount information outputting process in a case where the estimated residual amount is determined to reach the second threshold value in the second determining process, the second residual amount information outputting process including:
outputting second residual amount information indicating that a residual amount of the printing consumable in the tank has been depleted.
